# EUROPÄISCHE PATENTSCHRIFT

(11) **EP 3 250 303 B1**
(45) Veröffentlichungstag und Bekanntmachung des Hinweises auf die Patenterteilung: **14.11.2018**
(21) Anmeldenummer: 16708341.9
(22) Anmeldetag: 29.01.2016
(51) Int. Cl.: B01D 7/02

(54) **DISKONTINUIERLICH ARBEITENDER DESUBLIMATOR ZUR TRENNUNG VON PRODUKTEN AUS GASGEMISCHEN**
DISCONTINUOUSLY OPERATING DESUBLIMATOR FOR SEPARATING PRODUCTS FROM GAS MIXTURES
DÉSUBLIMATEUR À FONCTIONNEMENT DISCONTINU POUR SÉPARER DES PRODUITS DE MÉLANGES GAZEUX

(30) Priorität: 30.01.2015 DE 102015101398
(43) Veröffentlichungstag der Anmeldung: 06.12.2017
(73) Patentinhaber: Kelvion GmbH, 44807 Bochum (DE)
(72) Erfinder: FRIEDL, Werner R., 44894 Bochum (DE); SCHMITTER, Frank W., 44625 Herne (DE)
(74) Vertreter: Griepenstroh, Jörg
(86) Internationale Anmeldenummer: PCT/DE2016/100035
(87) Internationale Veröffentlichungsnummer: WO 2016/119781

(56) Entgegenhaltungen:
- DE-A1- 2 537 639
- DE-B- 1 229 984
- GB-A- 1 172 165
- US-A- 5 820 641

## Beschreibung

Die Erfindung betrifft einen diskontinuierlich arbeitenden Desublimator zur Trennung von Produkten aus Gasgemischen gemäß den Merkmalen im Oberbegriff des Patentanspruchs 1.

Durch die DE 34 07 104 A1 zählen Desublimatoren zum Stand der Technik, die anstelle von Rippenrohren im inneren des Gehäuses Lamellen aufweisen, welche an den Gehäuseseitenwänden befestigt sind. Ein Kühl- oder Heizmittel wird durch Kanäle geführt, die außenseitig der Gehäuseseitenwände angeordnet sind. Der Wärmeübergang erfolgt von den Kanälen auf die Gehäuseseitenwände zu den Lamellen. Die Bauweise derartiger Desublimatoren hat sich seit Jahren bewährt. Diese Desublimatoren werden beispielsweise zur Produktion von Phthalsäureanhydrid (PSA) verwendet. Der Prozessüberdruck beträgt typischerweise 0,1 bar(g) bei Temperaturen um 170°C. Die Verwendung dieser Desublimatorbauweise ist beschränkt durch den Druck und die Temperatur des Verfahrens. Höhere Über- oder Unterdrücke setzen zusätzlich innere Aussteifungen voraus, insbesondere in Kombination mit hohen oder niedrigen Temperaturen.

Zudem offenbaren US5820641 und DE602005006021T2 Desublimatoren.

Der Erfindung liegt die Aufgabe zugrunde, einen Desublimator dahingehend zu verbessern, dass er sowohl bei höheren Über- oder Unterdrücken in Kombination mit hohen oder niedrigen Temperaturen betrieben werden kann und gleichzeitig der konstruktive Aufwand gering ist, so dass eine Verwendung dieser Apparate bei anderen Anwendungen (außer PSA) möglich wird.

Diese Aufgabe ist bei einem Desublimator mit den Merkmalen des Patentanspruchs 1 gelöst.

Vorteilhafte Weiterbildungen der Erfindung sind in den Unteransprüchen enthalten.

Der erfindungsgemäße Desublimator arbeitet diskontinuierlich. Er dient zur Gewinnung von Produkten aus Gasgemischen. Hierzu besitzt er ein Gehäuse mit einer Gehäusewand und an einer Innenseite der Gehäusewand angeordnete, nach innen gerichtete Lamellen. Die Lamellen dienen zur Desublimation eines Produktes des Gasgemisches. Die Lamellen sind durch ein Kühlmittel kühlbar. Das Kühlmittel wird durch wenigstens einen Kanal an der Gehäusewand geleitet. Dadurch wird die bei der Desublimation entstehende Wärme abgeleitet. Zusätzlich befindet sich im Inneren des Gehäuses eine Kühlleitung. Die Kühlleitung vergrößert noch einmal die innere Oberfläche des Gehäuses, die im Wärmeaustausch mit dem Gasgemisch steht.

Im Unterschied zu Desublimatoren in Plattenbauweise (DE 34 07 104 A1), ist das Gehäuse des Desublimators zylindrisch. Es ist dazu ausgebildet, in seiner Längsrichtung von dem Gasgemisch durchströmt zu werden. Die Lamellen an der Innenseite der Gehäusewand, die bei Desublimatoren in Plattenbauweise typischerweise in parallelem Abstand zueinander verlaufen, stehen bei dem Desublimator mit zylindrischem Gehäuse bevorzugt im Winkel zueinander. Sie weisen bevorzugt zur Mittellängsachse des zylindrischen Gehäuses. Der gegenseitige Abstand aneinander benachbarter Lamellen nimmt nach radial innen ab, bedingt durch die zylindrische Form des Gehäuses. Die inneren Enden einander benachbarter Lamellen berühren sich nicht gegenseitig und kommen auch nicht mit der inneren Kühlleitung in Kontakt.

Der Innenbereich des Gehäuses ist frei von Verstrebungen, welche einander gegenüberliegende Bereiche der Gehäusewände miteinander verbinden. Auch bei höherem Innendruck von mehr als z.B. 2 bar(g), besitzt das Gehäuse durch seine zylindrische Form eine hinreichende Steifigkeit und Druckfestigkeit, so dass sich ein stark erweiterter Einsatzbereich für die Desublimatortechnologie ergibt. Ein ganz wesentlicher Vorteil ist, dass diese Bauform gegenüber quaderförmigen Gehäusen eine höhere Beständigkeit gegen Wechselbelastungen (Druck und Temperatur) ermöglicht. Die zylindrische Bauform ermöglicht daher andere Betriebsparameter und Betriebsweisen, als Desublimatoren mit quaderförmigen Gehäusen bzw. im Wesentlichen parallel zueinander verlaufenden Gehäusewänden.

Eine fertigungstechnische Herausforderung bei einem solchen Desublimator ist, die Lamellen mit der Gehäusewand stoffschlüssig zu verbinden, um einen optimalen Wärmeübergang zu erreichen. Eine stoffschlüssige Verbindung setzt die Zugänglichkeit für ein Schweißwerkzeug voraus. Das zylindrische Gehäuse besitzt eine Länge von z. B. 700 bis 8.000 mm bei einem Innendurchmesser von z. B. 100 mm bis 1.000 mm. Es muss also bei einer Länge von 8.000 mm noch ca. 4.000 mm entfernt vom Ende des zylindrischen Gehäuses eine Schweißoperation möglich sein. Hierzu muss ein Innenbereich des Gehäuses für einen Schweißkopf frei bleiben, der in Längsrichtung des Gehäuses verlagert werden kann. In dem freibleibenden Bereich wird später das Kühlrohr positioniert. Das Kühlrohr kann je nach Durchmesser auch als Kühlzylinder bezeichnet werden.

Es ergeben sich allerdings erweiterte fertigungstechnische Möglichkeiten, wenn das Gehäuse in mehrere Umfangssegmente unterteilt wird. Jedes der Segmente, bei denen es sich z. B. um Halbschalen handelt, wird einzeln mit Lamellen versehen. Anschließend werden die Segmente zu dem zylindrischen Gehäuse gefügt. Nachteilig bei dieser Vorgehensweise ist, dass Fügeverbindungen, insbesondere Schweißverbindungen, in Längsrichtung des Gehäuses verlaufen. Bei einer Druckbelastung eines mit Innendruck belasteten, rotationssymmetrischen Körpers treten immer höhere Tangentialspannungen auf, als Spannungen in Längsrichtung.

Fügeverbindungen, die in Längsrichtung verlaufen, wie z. B. Schweißnähte unterliegen daher höheren mechanischen Belastungen als Fügeverbindungen, die in Umfangsrichtung verlaufen. Die Fügeverbindungen unterliegen daher hohen Belastungen.

Alternativ oder zusätzlich ist es möglich, einzelne zylindrische Längenabschnitte zu einem Gehäuse miteinander zu verbinden. Bei dieser Vorgehensweise können in vorteilhafte Weise nahtlose Rohre für jeden einzelnen Längenabschnitt verwendet werden. Das Fügen der einzelnen Längenabschnitte kann allerdings etwas aufwändiger sein, wenn ein Kanal für das Kühlmittel im benachbarten Längenabschnitt fortgeführt werden soll.

Der Begriff Längenabschnitt ist im Zusammenhang mit dieser Erfindung nicht nur als Längenabschnitt eines zylindrischen Gehäuses zu verstehen, der mit einem nachfolgenden Längenabschnitt zu verbinden ist, sondern generell als Bereich mit einer bestimmten Funktion oder Gestaltung, z. B. mit einer bestimmten Anordnung, Geometrie oder Anzahl von Lamellen oder mit bestimmten Kühlkanälen oder Kühlmöglichkeiten.

Der Begriff Kanal steht für einen von dem Kühlmittel durchströmbaren Leitungsabschnitt, der sich zumindest über einen Teilbereich des Umfang und/oder der Länge des Gehäuses des Desublimators erstreckt. Mehrere dieser Kanäle können parallel zueinander in Längsrichtung oder Umfangrichtung des Gehäuses verlaufen. Der Verlauf kann mäanderartig oder schraubenlinienförmig sein. Es ist auch möglich, das Gehäuse doppelwandig auszuführen, so dass ein Ringraum entsteht, der als Kanal dient. Bei einer Bauweise in Halbschalen können z. B. die Halbschalen doppelwandig ausgebildet sein, so dass Ringraumsegmente gebildet werden, die jeweils als Kanal für das Kühlmittel dienen. Ein Kanal erstreckt sich nicht zwingend von einem Eintrittsende zu einem Austrittsende des gesamten Gehäuses. Ein Kanal kann sich auch nur über einen einzelnen oder mehrere benachbarte Längenabschnitte des Gehäuses erstrecken. Hinsichtlich der mechanischen Belastbarkeit sind in Längsrichtung und Umfangsrichtung durchgängige Gehäuse die beste Wahl, da es keine Schwachstellen durch Längsnähte oder umlaufende Nähte gibt. Insbesondere eignen sich nahtlos gezogene Rohre.

In dem Gehäuse ist eine und insbesondere eine einzige innere Kühlleitung mit nach außen gerichteten Lamellen angeordnet. Die Kühlleitung ist insbesondere zentral in Längsrichtung des zylindrischen Gehäuses verlaufend angeordnet. Sie durchsetzt das Gehäuse über seine gesamte Länge. Bei einer solchen Kühlleitung erstrecken sich die Lamellen bevorzugt sternförmig, d. h. in Radialrichtung, von innen nach außen. Auch bei einer Kühlleitung ist es wünschenswert, in bestimmten Längenabschnitten besonders viele Lamellen zu befestigen. Das ist bei nach außen gerichteten Lamellen prinzipiell einfacher, als bei nach innen gerichteten Lamellen, weil der Abstand benachbarter Lamellen nach radial außen zunimmt und eine bessere Zugänglichkeit für die Befestigungsmittel ermöglicht.

In bevorzugter Weise sind die nach außen gerichteten Lamellen an der inneren Kühlleitung und die nach innen gerichteten Lamellen an der Gehäusewand innerhalb eines Längenabschnittes gleichmäßig verteilt über den Umfang der Kühlleitung oder des Gehäuses angeordnet. Die gleichmäßige Verteilung der Lamellen ermöglicht jeweils über den Umfang eines Längenabschnittes betrachtet eine gleichmäßige Wärmeabfuhr und auch eine gleichmäßige Ablagerung des Produktes. Eine gleichmäßige Beladung des diskontinuierlich arbeitenden Desublimators verbessert den Wirkungsgrad des Verfahrens zur Gewinnung von Produkten aus Gasgemischen.

Das Gehäuse besitzt in einer bevorzugten Ausgestaltung der Erfindung getrennt voneinander kühlbare Längenabschnitte. Die Längenabschnitte können dennoch an ein gemeinsames Kühlsystem angeschlossen sein, allerdings können über Stell- und/oder Regelmittel in den einzelnen Längenabschnitten unterschiedliche Temperaturen zum Kühlen und/oder Heizen eingestellt werden.

Der Desublimator kann bevorzugt über dieselben Kanäle, durch die ein Kühlmittel geleitet wird, geheizt werden. Das heißt, dass die Temperaturführung des Desublimators über die Kanäle an der Gehäusewand und/oder die wenigstens eine innere Kühlleitung erfolgt.

Im Eintrittsbereich des Gasstromes in das Gehäuse besitzt das Gasgemisch die höchste Konzentration des zu gewinnenden Produktes. Daher lagert sich an den Lamellen im Eintrittsbereich des Gehäuses eine verhältnismäßig große Menge des zu gewinnenden Produktes ab. Das abgelagerte Produkt wirkt wie ein thermischer Isolator an den Lamellen, so dass dem Gasgemisch insbesondere im stark beladenen Eintrittsbereich zunehmend weniger Wärmeenergie entzogen werden kann. Die lokale Kühlleistung sinkt.

Die Erfindung sieht vor, die Kühlleistung in wenigstens einem in Strömungsrichtung des Gasgemisches nachgelagerten Längenabschnitt zu erhöhen, indem die Oberfläche der Lamellen zunimmt und die Anzahl der Lamellen erhöht wird.

In einer bevorzugten Ausgestaltung verlaufen die nach innen gerichteten Lamellen radial gerade von außen nach innen bzw. umgekehrt, die nach außen gerichteten Lamellen verlaufen radial gerade von innen nach außen. Diese Anordnung kann zumindest im Hinblick auf die Lamellen an der Kühlleitung als sternförmig bezeichnet werden, aufgrund der radialen Orientierung der einzelnen Lamellen.

Die Rippen sind jeweils in Längsrichtung des Gehäuses orientiert befestigt. Das heißt, dass eine einzelne Rippe nicht ringförmig umlaufend gestaltet ist, sondern dass Anfang und Ende einer Rippe in axialem Abstand bezogen auf die Längsachse des Gehäuses angeordnet sind. Der Ausdruck "in Längsrichtung des Gehäuses orientiert" meint in diesem Zusammenhang, dass Anfang und Ende einer Rippe in Umfangsrichtung zueinander versetzt angeordnet sein können (Wendelform).

Die Rippen verlaufen in Richtung der Gasströmung. Sie stehen nicht quer zur Gasströmung, weil sie in Axialrichtung des Gehäuses orientiert sind. Bevorzugt ist die Axialrichtung gleichzeitig die senkrechte Richtung, d. h. die Gasströmung strömt von oben nach unten oder umgekehrt.

In einer Weiterbildung liegen den freien radialen Enden der nach außen gerichteten Lamellen jeweils freie radiale Enden von nach innen gerichteten Lamellen unmittelbar gegenüber. Die inneren und äußeren Lamellen berühren sich hierbei nicht.

Eine weitere Leistungsverbesserung kann erreicht werden, wenn die Oberfläche der Lamellen von einem Eintrittsende des Gehäuses zu einem Austrittsendes des Gehäuses zunimmt. Das Eintrittsende kann ein oberes oder ein unteres Ende des Desublimators sein.

Die Zunahme der Oberfläche erfolgt mit einem Faktor zwischen 1 und 10. Die Zunahme kann durch eine Vergrößerung der Rippenoberfläche je Längeneinheit, z. B. durch eine Profilierung erfolgen. Eine Profilierung kann durch Wellen, Sicken oder auch Ausbauchungen, Durchstellungen, Öffnungen oder Verprägungen gebildet sein. Es können auch zusätzliche Einrichtungen an einer einzelnen Lamelle angeordnet sein, wobei die Anzahl und Größe dieser zusätzlich angeordneten Einrichtungen in Strömungsrichtung des Desublimators zunimmt.

Anstelle der oder ergänzend zur Vergrößerung der Oberflächen einer einzelnen Lamelle können zusätzliche Lamellen vorgesehen sein. Vorzugsweise besitzt der Desublimator in Strömungsrichtung des Gasgemisches wenigstens zwei aufeinanderfolgende Längenabschnitte, wobei die Anzahl der Lamellen von Längenabschnitt zu Längenabschnitt zunimmt. Es sind bevorzugt drei oder mehr Längenabschnitte vorgesehen, insbesondere 4 bis 8.

Beispielsweise gibt es eine erste Gruppe von Lamellen, die mit gleichbleibender Länge und Anordnung sich über den gesamten Höhenbereich bzw. die gesamte mit Rippen zu versehende Länge des Desublimators erstrecken. Das bedeutet nicht, dass eine Lamelle zwingend genauso lang ist wie der gesamte Desublimator. Vielmehr erstrecken sich die Lamellen bevorzugt nur über eine begrenzte Länge von z. B. 100 mm bis 1.000 mm. Die kürzeren Lamellen lassen sich leichter handhaben und verwerfen sich nicht so stark beim Verschweißen mit der Gehäusewand. In der Flucht einer vorhergehenden Lamelle kann dann eine weitere Lamelle angeordnet sein. In der Gesamtheit der fluchtenden Lamellen ergibt sich eine Lamellenanordnung, an welcher das Gasgemisch entlang strömt.

Zu dieser ersten Gruppe von Lamellen können in einem mittleren Höhenbereich des Desublimators zusätzliche Lamellen angeordnet sein, die sich ebenfalls als Anordnung mehrerer fluchtender Lamellen bis zum Austrittsende des Desublimators erstrecken. Die Anzahl der Lamellen kann z. B. verdoppelt sein. Diese zusätzlichen Lamellen können sowohl nach innen gerichtete als auch nach außen gerichtete Lamellen sein.

Schließlich können in einem weiteren Höhenbereich zusätzlich noch einmal weitere Lamellen, z. B. Lamellen geringerer Höhe angeordnet sein (Zwischenlamellen). Diese Lamellen können insbesondere nach innen gerichtete Lamellen sein, die an der Gehäusewand befestigt sind. Die Höhe der Lamellen ist in Radialrichtung des zylindrischen Gehäuses zu messen. Diese gestufte Anordnung trägt dem Gedanken Rechnung, dass eine besonders große Menge des Produktes bereits im Eintrittsbereich des Gehäuses an den Lamellen abgeschieden wird. Das Gasgemisch enthält also nur noch einen geringeren Anteil des Produktes. Um eine gesteigerte Abscheidung von Produkten zu erreichen, kann die Oberfläche der Lamellen vergrößert werden. Das Verhältnis der Oberflächen zwischen dem Eintrittsbereich und dem Austrittsbereich des Desublimators liegt daher je nach Anwendungsfall insbesondere in einem Bereich von 1:1 bis 1:8, insbesondere im Bereich von 1:1 bis 1:6 und insbesondere in einem Bereich von 1:3 bis 1:4.

Der erfindungsgemäße Desublimator besitzt eingangsseitig eine Verteilerkammer, um die Stoffströme gleichmäßig auf alle Lamellen zu verteilen. Im Ausgangsbereich ist eine geeignete Sammelkammer angeordnet.

Das Gehäuse des Desublimators wird von außen über die Gehäusewand gekühlt. Die Oberfläche der Gehäusewand ist wesentlich größer als die Oberfläche der inneren Kühlleitung. Daher sind an der Gehäusewand bevorzugt mehr Lamellen angeordnet als an der inneren Kühlleitung.

Der Innendurchmesser des Gehäuses liegt bevorzugt in einem Bereich von 100 bis 1.000 mm, insbesondere von 400 bis 800 mm.

Die einander gegenüber liegenden Lamellen können in Ihrer Höhe von Längenabschnitt zu Längenabschnitt variieren und insbesondere alternieren. Dadurch soll das Gasgemisch beim Übergang von einem Längenabschnitt in den nächsten umgelenkt und so eine Gassenbildung vermieden werden.

Die einzelnen Lamellen sollten aus thermodynamischen Gründen eine Höhe von ca. 60 bis 80 mm, vorzugsweise ca. 100 bis 150 mm besitzen. Ausnahme hiervon sind Zwischenlamellen, die konstruktiv bedingt eine geringere Höhe haben können. Als Zwischenlamellen werden Lamellen bezeichnet, denen nicht unmittelbar gegenüberliegend eine Lamelle an der Kühlleitung angeordnet ist.

Die Lamellen können in ihrer Abfolge leicht in Umfangsrichtung zueinander versetzt angeordnet sein. Dadurch trifft die Strömung bei jedem umfangsseitigen Versatz auf die Stirnseite einer Lamelle, was zu den erwünschten Ablagerungen des Produktes auch an der Stirnseite führt und den Abscheidungsgrad noch einmal verbessert.

Eine ähnliche Wirkung können Öffnungen in den Lamellen haben, beispielsweise quer zur Strömungsrichtung verlaufende Schlitze in den Lamellen. Durch derartige Schlitze soll die hauptsächlich laminare Strömung aufgebrochen werden, um Turbulenzen zu bilden. Zudem kann die Strömung dabei von der einen Seite auf die andere Seite einer Lamelle übertreten. In gleicher Weise können die Lamellen mit Turbulatoren oder anderen Elementen, die geeignet sind, eine laminare Strömung aufzubrechen, versehen sein.

Die Auslegung der Lamellen erfolgt vorzugsweise in Anpassung an die Dampfdruckkurve des zu gewinnenden Produktes. Das betrifft vor allem die Anzahl der Lamellen in den jeweiligen Längenabschnitten. Verteilt auf zum Beispiel sechs Längenabschnitte kann die Anzahl n der Lamellen an der Gehäusewand beginnend von der Eintrittsseite n / 2n / 3n / 4n / 5n / 5n betragen. Bevorzugt sind ausgangsseitig so viele Lamellen angeordnet, wie sie fertigungstechnisch noch an der Gehäusewand befestigt werden können.

Wenn im Bereich eines mittleren Längenabschnitts des Desublimators zusätzliche Lamellen angeordnet sind, lagert sich an den Stirnseiten der Lamellen kristallines Produkt ab, welches die Gestalt von feinen Nadeln haben kann. Diese können durch den dynamischen Druck der Gasströmung mitgerissen werden, würden aber dann an den Stirnseiten von Lamellen im nachfolgenden Längenabschnitt hängen bleiben und sich auf ihnen ablagern. Daher dient vor allem der letzte Längenabschnitt funktional auch als Filter, ohne jedoch als separates Filterbauteil ausgebildet zu sein.

Die Lamellen werden vorzugsweise durch ein Laserschweißverfahren mit dem Gehäuse verbunden. Der Laserstrahl kann einen relativ weiten Weg zwischen den Lamellen zurücklegen, ohne von dem geringen Abstand einander benachbarter Lamellen behindert zu werden. Mit einem geeigneten Schweißkopf können vom Schweißkopf bis zur Fügezone bis zu 20 cm überbrückt werden. Dies ermöglicht eine eng nebeneinander stehendende schweißtechnische Befestigung der Lamellen an der Gehäusewand und am Kühlrohr.

Die Erfindung schließt je nach gewünschter Strömungsführung nicht aus, dass die grundsätzlich radial verlaufenden Lamellen schräg gestellt sind und dadurch eine gewissermaßen wendelförmige oder schraubenlinienförmige Strömungsführung bewirken. Auch in Umfangsrichtung von Längenabschnitt zu Längenabschnitt wechselnd schräg gestellte Lamellen, d. h. wechselnde Strömungsrichtungen sind möglich.

Aufgrund der vergleichsweise geringen Strömungsgeschwindigkeiten, können auch nur begrenzte Stoffströme durch einen einzelnen Desublimator geführt werden. Die Erfindung sieht daher in vorteilhafter Weiterbildung vor, dass mehrere derartiger Desublimatoren parallel geschaltet sind. In der Parallelschaltung können die Desublimatoren in der Summe mit größeren Stoffströmen beaufschlagt werden. Wenn die Desublimatoren so viel Produkt aufgenommen haben, dass eine weitere Beladung ineffektiv ist, folgt auf diese erste Phase die zweite Phase des Gewinnungsprozesses, nämlich die Entfernung des Produktes. Das Produkt kann durch Druckänderung im Inneren des Desublimators und/oder Temperaturerhöhung des Kühlmittels entfernt werden. Eine Druckänderung bewirkt einen Phasenwechsel des Produktes. Das Produkt tritt bevorzugt von der festen in die flüssige Phase über und fließt durch die Schwerkraft eigenständig nach unten aus dem Desublimator ab. Auch ein Übertritt in die Gasphase ist möglich. Diese Vorgehensweise (Druckänderung) hat den Vorteil, dass die Temperatur des Gehäuses konstant gehalten werden kann. Die Energieverluste sind dabei wesentlich geringer, als bei der Methode, den Druck konstant zu halten und die Temperatur zu erhöhen. Eine höhere Temperatur bewirkt selbstverständlich ebenso wie die Änderung des Druckes ein Abschmelzen des gewonnen Produktes.

Die Erfindung sieht neben einem einzelnen Desublimator auch eine Desublimationsanordnung vor. Eine Desublimationsanordnung umfasst wenigstens zwei Desublimatoren. Ein erster Desublimator wird beispielsweise mit einem Gasgemisch beaufschlagt und gleichzeitig so weit gekühlt, dass sich das Produkt anlagert, während zeitgleich ein weiterer Desublimator abgeschmolzen wird, in dem das angelagerte Produkt in die bevorzugt flüssige Phase überführt und aus dem Desublimator entfernt wird. Im nächsten Schritt tauschen die beiden Desublimatoren ihre Aufgaben, so dass entsprechende Desublimationsprodukte im stetigen Wechsel gewonnen werden können bzw. das Gasgemisch gereinigt werden kann.

In besonders bevorzugter Ausgestaltung besitzt die Desublimationsanordnung nicht nur zwei einzelne Desublimatoren, sondern Gruppen von Desublimatoren, die in Parallelschaltung angeordnet und jeweils mit dem Gasgemisch beaufschlagbar sind. Genau wie bei einzelnen Desublimatoren ist jede der Gruppen dafür vorgesehen, im Wechsel Produkte durch Desublimation zu gewinnen und anschließend das bereits gewonnene Produkt durch Änderung des Druckes und/oder Erhöhung der Temperatur abzuschmelzen, wobei Stellmittel zur wechselseitigen Zuleitung des Gasgemisches zu der jeweiligen Gruppe von Desublimatoren vorgesehen sind.

In einer Weiterbildung der Erfindung können mehrere der Desublimatoren in Reihenschaltung angeordnet sein. Das heißt, dass der Gaststrom zunächst einen ersten Desublimator durchläuft und anschließend wenigstens einen weiteren Desublimator. Dadurch kann die Baulänge der einzelnen Desublimatoren begrenzt werden und der Grad der Produktabscheidung gesteigert werden. Die in Reihe geschalteten Desublimatoren arbeiten nach demselben Prinzip, können sich in ihrem Aufbau aber unterscheiden, da in einem nachgeschalteten, also stromabwärtigen Desublimator bereits deutlich weniger Produkt im Gasgemisch enthalten ist. In dem stromabwärtigen Desublimator wird daher zwar weniger Produkt abgelagert, allerdings ist das Risiko, dass ein einzelner Strömungspfad zwischen benachbarten Lamellen durch Ablagerungen des Produktes eingeengt wird oder sogar blockiert wird, viel geringer als im stromaufwärtigen Desublimator.

Desublimatoren dieser Bauart können insbesondere in Verbindung mit der Desublimation von Kohlenstoffdioxid aus Erd- oder Biogasen zum Einsatz kommen.

Die Erfindung wird nachfolgend anhand eines in den schematischen Zeichnungen dargestellten Ausführungsbeispiels näher erläutert. Es zeigt:
- Figur 1: einen Desublimator in einer Seitenansicht;
- Figur 2: den Desublimator der Figur 1 im Querschnitt entlang der Linie II-II;
- Figur 3: den Desublimator der Figur 1 im Querschnitt entlang der Linie III-III;
- Figur 4: eine Ansicht des Desublimators der Figur 1 von unten;
- Figur 5: eine Ansicht auf die Lamellen an einer abgewickelten Gehäusewand eines Desublimators in einer ersten Ausführungsform;
- Figur 6: eine Ansicht auf die Lamellen an einer abgewickelten Gehäusewand eines Desublimators in einer zweiten Ausführungsform;
- Figur 7: eine Ansicht auf die Lamellen an einer abgewickelten Gehäusewand eines Desublimators in einer dritten Ausführungsform;
- Figur 8: einen Teilbereich eines Längsschnitts durch einen Desublimator;
- Figur 9: zwei Desublimatoren in Reihenschaltung und
- Figur 10: eine Desublimationsanordnung mit mehreren Desublimatoren in einer Ansicht von oben.

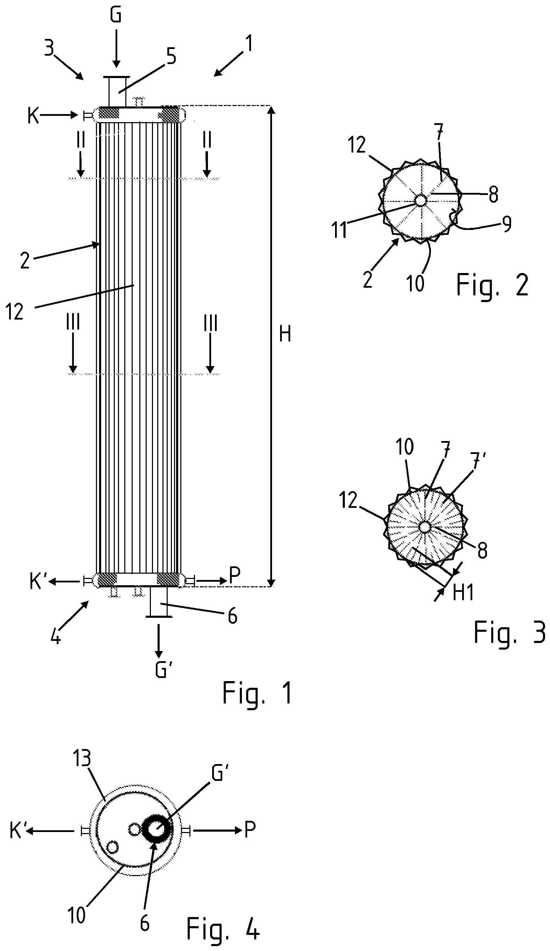

Figur 1 zeigt einen Desublimator 1 mit einem langgestreckten zylindrischen Gehäuse 2. Die Darstellung zeigt die Betriebsposition des Desublimators 1. Er besitzt einen oberen Bereich, der in diesem Fall als Eintrittsbereich 3 dient und einen unteren Bereich, der als Austrittsbereich 4 dient. Die Strömungsrichtung ist vertikal von oben nach unten, d. h. vom Eintrittsbereich 3 zum Austrittsbereich 4. Es gibt zwei Stoffströme. Über den Eintrittsbereich 3 wird ein Gasgemisch G über einen Anschlussstutzen 5 in das Innere des Gehäuses 2 eingeleitet. Das gereinigte Gasgemisch G' kann am Austrittsende 4 über einen Austrittsstutzen 6 wieder abgezogen werden. Der Höhenunterschied zwischen dem Eintrittsbereich 3 und dem Austrittsbereich 4 beträgt H = 700 mm bis 8.000 mm. In nicht näher dargestellter Weise wird das Gasgemisch G gleichmäßig über den Querschnitt verteilt in das Gehäuse 2 eingeleitet. Der zweite Stoffstrom ist ein Kühlmittel K, das bei diesem Ausführungsbeispiel im Gleichstrom zu dem Gasgemisch G strömt.

Figur 2 zeigt, dass das Gehäuse 2 im Inneren sternförmig in gleichgroße Kreissektoren unterteilt ist. In diesem Ausführungsbeispiel sind es acht gleichgroße Kreissektoren, die durch Lamellen 7, 8 gebildet sind. Es gibt an einer Innenseite 9 der Gehäusewand 10 des Gehäuses 2 insgesamt acht nach radial innen gerichtete Lamellen 7. Zudem gibt es eine zentrale innere Kühlleitung 11, an der ebenfalls acht nach radial außen gerichtete Lamellen 8 befestigt sind. Die Kühlleitung 11 hat einen kreisrunden Querschnitt. Die Lamellen 7 und 8 liegen sich jeweils unmittelbar gegenüber, ohne sich zu berühren. Die radial nach innen gerichteten Lamellen 7 sind in dieser Schnittebene etwas länger bemessen als die radial nach außen gerichteten Lamellen 8 an der inneren Kühlleitung 11. Die Lamellen 7, 8 sind von Axialrichtung des Gehäuses 2 aufeinander folgenden Teilstücken von Lamellen gebildet, die sich dadurch in unterschiedlichen Längenabschnitten des Gehäuses 2 befinden. Die Teilstücke können 100 mm bis 1.000 mm lang sein. Die Lamellen 7, 8 besitzen eine Breite von 0,8 mm bis 5 mm, insbesondere 1 mm bis 3 mm und sind stoffschlüssig mit der Gehäusewand 10 bzw. dem Kühlrohr 11 verbunden, insbesondere durch Laserschweißen verschweißt.

Die Lamellen 7, 8 dienen zur Aufnahme eines Produktes aus dem Gasgemisch G. Hierzu werden die Lamellen 7, 8 gekühlt. Das erfolgt mittels Kanälen 12, die umfangsseitig des Gehäuses 2 angeordnet sind, und über welche ein Kühlmittel K unmittelbar in Kontakt mit der Gehäusewand 10 bringbar ist. Bei diesem Ausführungsbeispiel sind die Kanäle 12 im Querschnitt dreieckförmig. Sie sind gleichmäßig über den Umfang der Gehäusewand 10 verteilt angeordnet. Die Temperatur des Kühlmittels K nimmt in Strömungsrichtung des Kühlmittels K zu. Bei diesem Ausführungsbeispiel strömt das Kühlmittel K in die gleiche Richtung wie das Gasgemisch G. Dem Gasgemisch G wird so viel Wärme entzogen, dass sich an den Lamellen 7, 8 das zu gewinnende Produkt ablagert. Dieser Sublimationsprozess wird so lange fortgeführt, bis sich eine weitere Ablagerung wirtschaftlich nicht mehr lohnt bzw. wenn der gewünschte Reinheitsgrad des Gasgemisches G erreicht ist. Das gereinigte Gasgemisch ist als G' gekennzeichnet. Das erwärmte Kühlmittel ist mit K' gekennzeichnet.

Im zweiten Schritt wird der Gasstrom G unterbrochen und das Produkt P abgeschmolzen. Dies kann dadurch erfolgen, dass der Druck innerhalb des Desublimators 1 geändert wird. Alternativ oder zusätzlich kann die Temperatur des Kühlmittels K erhöht werden. In jedem Fall wird das Produkt P in seine bevorzugt flüssige Phase überführt und fließt durch die Schwerkraft selbsttätig nach unten, wo es als bevorzugt flüssiges Produkt P aus dem Gehäuse 2 abgezogen werden kann. Anschließend wird die Temperatur des Kühlmittels K wieder gesenkt und/oder der Druck innerhalb des Gehäuses 2 wieder soweit geändert, dass sich die Bedingungen für die Bildung weiteren Produktes P an den Lamellen 7, 8 einstellen. Der Prozess beginnt dann von vorn, indem wiederum Gasgemisch zugeführt wird.

Der Desublimator 1 besitzt in diesem Ausführungsbeispiel sechs unterschiedliche Längenabschnitte, die sich jeweils über etwa 1/6 der Höhe H des Desublimators 1 erstrecken. Im oberen Sechstel ist der Desublimator 1 beispielsweise mit einer ersten Anzahl von Lamellen 7, 8 versehen, beispielsweise mit jeweils acht nach innen gerichteten und acht nach außen gerichteten Lamellen 7, 8. Die Anzahl der nach innen gerichteten Lamellen 7 richtet sich nach der Folge n / 2n / 3n / 4n / 5n / 5n mit n=8. Daher beträgt die Anzahl der Lamellen im 4. Sechstel 4 x 8 = 32, so dass die Oberfläche der Lamellen 7, 7', 8 in Strömungsrichtung stark zunimmt.

Figur 3 zeigt eine Schnittdarstellung entlang der Linie III-III durch den Desublimator 1 der Figur 1. Es ist zu erkennen, dass in dieser Schnittebene im 4. Sechstel näher zum Austrittsende 4 hin wesentlich mehr Lamellen 7, 8 angeordnet sind. Die Anzahl der höheren Lamellen 7, 8 hat sich gegenüber derjenigen in der oberen Schnittebene verdoppelt. Zusätzlich ist eine weitere Lamelle 7' anderer Geometrie hinzugekommen. Diese Lamellen 7' sind in Radialrichtung gemessen kürzer und besitzen eine etwas geringere Höhe H1 als die zuvor erläuterten Lamellen 7, 8. Des Weiteren liegt den kürzeren Lamellen 7', die an der Gehäusewand 10 befestigt sind, keine Lamelle an der Kühlleitung 11 gegenüber. Umgekehrt liegt jeder Lamelle 8 der Kühlleitung 11 eine Lamelle 7 an der Gehäusewand 10 gegenüber.

Figur 4 zeigt den Desublimator der Figur 1 von unten. Es ist zu erkennen, dass in der Bildebene nach links ein Stutzen vorgesehen ist, über den das erwärmte Kühlmittel K' austritt. In der Bildebene nach rechts kann über den dargestellten Stutzen das flüssige Produkt P abgeführt werden. Das gereinigte Gasgemisch G' tritt über den Austrittsstutzen 6 nach unten aus. Ferner ist eine Ringkammer 13 zu erkennen, welche die Gehäusewand 10 außenseitig umgibt und in welcher sich das erwärmte Kühlmittel K' sammelt.

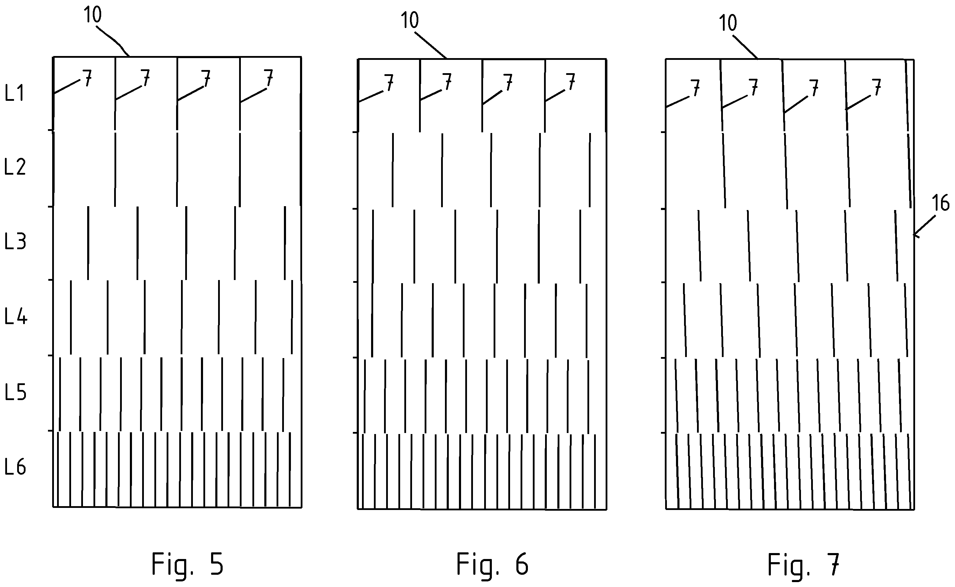

Die Figur 5 bis 7 zeigen jeweils eine Abwicklung eines mit Lamellen 7 versehenen Gehäuses 2 mit Blickrichtung auf die Innenseite des Gehäuses 2, d. h. auf die Lamellen 7 an der Gehäusewand 10. In der Bildebene oben ist jeweils der Eintrittsbereich. Unten ist der Austrittsbereich. Es gibt zwischen dem oberen Ende und dem unteren Ende insgesamt sechs Längenabschnitte L1-L6 gleicher Länge. Die Längenabschnitte L1-L6 weisen jeweils eine bestimmte Anzahl und Anordnung von Lamellen 7 auf, wobei die Anzahl im letzten Längenabschnitt L6 größer ist als im ersten Längenabschnitt L1.

In Figur 5 wird gezeigt, dass die Anzahl der Lamellen 7 nicht zwangsläufig von Längenabschnitt zu Längenabschnitt zunehmen muss. Konkret beträgt die Anzahl der Lamellen 7 in den ersten beiden Längenabschnitten L1, L2 jeweils vier. In den nachfolgenden Längenabschnitten L3 bis L6 beträgt die Anzahl 5, 7, 12 und 20 Lamellen 7.

Das Ausführungsbeispiel der Figur 6 unterscheidet sich von Figur 5 dadurch, dass schon zwischen den ersten beiden Längenabschnitten L1 und L2 die Anzahl der Lamellen 7 zunimmt. Konkret beträgt die Anzahl 4, 5, 6, 8, 12, 20 Lamellen 7 in den jeweiligen Längenabschnitten L1 bis L6.

Das Ausführungsbeispiel der Figur 7 entspricht hinsichtlich der Anzahl der Lamellen 7 demjenigen der Figur 5. Der Unterschied ist, dass die Lamellen 7 leicht geneigt angeordnet sind, d.h. in einem bevorzugt spitzen Winkel zur Längskante 16 der abgewickelten Gehäusewand 10 stehen. In einer zylindrischen Anordnung entspricht das einer wendelförmigen oder schraubenlinienförmigen Anordnung. Auf diese Weise kann der Strömungspfad des Gasgemisches G verlängert werden. In nicht näher dargestellter Weise kann die Anzahl der Lamellen 7 auch an der Kühlleitung 11 zunehmen. Auch können die Lamellen 7 an der Kühlleitung 11 wendelförmig angeordnet sein.

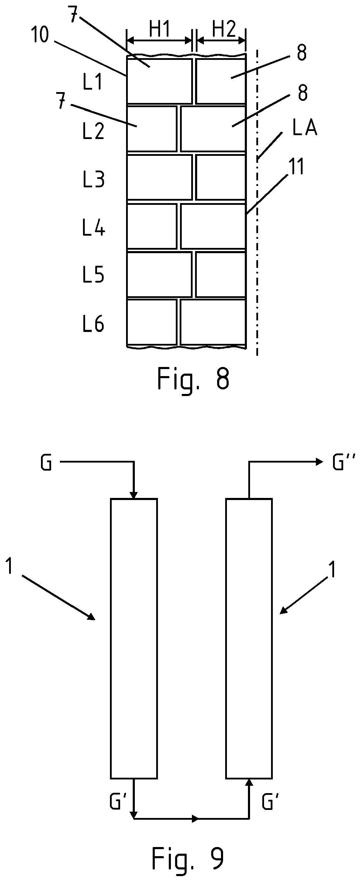

Figur 8 zeigt einen Teilbereich eines Desublimators im Längsschnitt mir Blickrichtung auf die Lamellen 7, 8. In der Bildebene rechts befindet sich die Mittellängsachse LA des Gehäuses 2, die durch die Kühlleitung 11 verläuft. In der Bildebene links befindet sich die Gehäusewand 10. Es sind Lamellen 7,8 in sechs Längenabschnitten L1 bis L6 dargestellt. Die nach innen gerichtete Lamelle 7 im ersten Längenabschnitt L1 hat eine erste Höhe H1 und die gegenüberliegende, nach außen gerichtete Lamelle 8 hat eine geringere Höhe H2. In dem darauf folgenden Längenabschnitt L2 ist das Verhältnis H1/H2 umgekehrt. In den nachfolgenden Längenabschnitten L3 bis L6 wird dieser Wechsel in gleicher Weise fortgeführt. Dadurch wird eine Gassenbildung im Bereich der sich gegenüberliegenden Enden der Lamellen 7, 8 vermieden. H1 und H2 betragen im Wechsel ca. 60 bis 130 mm und ca. 80 bis 150 mm, vorzugsweise 110 und 130 mm. Der Abstand zwischen den Lamellen 7, 8 beträgt ca. 10 mm. Der radiale Abstand zwischen dem Gehäuse 2 und der Kühlleitung 11 liegt daher insgesamt in einem Bereich von ca. 150 bis 290 mm, bzw. bei Werten von ca. 110 mm und ca. 130 mm für H1 und H2 und ca. 10 mm für den Abstand bei insgesamt ca. 250 mm.

Figur 9 zeigt eine Reihenschaltung von zwei Desublimatoren 1. Das Gasgemisch G tritt von oben in den ersten Desublimator 1 ein. Unten tritt das gereinigte Gasgemisch G' aus und wird von unten einem weiteren Desublimator 1 zugeführt, aus dem es oben als nochmals gereinigtes Gasgemisch G" austritt. Die Darstellung verdeutlicht, dass das Eintrittsende des Desublimators 1 nicht zwingend das obere Ende des Gehäuses sein muss. Ferner kann sich der stromabwärtige zweite Desublimator 1 in seinem inneren Aufbau von dem stromaufwärtigen, ersten Desublimator 1 unterscheiden, insbesondere in der Anzahl der Lamellen 7, 8.

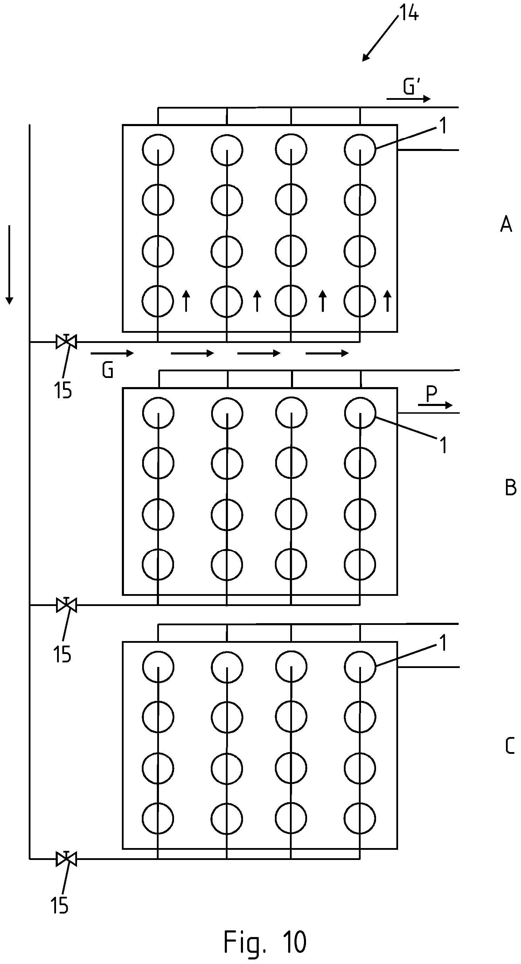

Figur 10 zeigt eine Desublimationsanordnung 14 mit drei Gruppen A, B, C von baugleichen Desublimatoren 1. Die einzelnen Gruppen A, B, C können jeweils dieselben Produktionsstufen durchlaufen, wie sie nachfolgend erläutert werden.

Es ist zu erkennen, dass das Gasgemisch G zunächst nur der ersten Gruppe A zugeführt wird. Das gereinigte Gasgemisch G' tritt aus der Gruppe A von Desublimatoren 1 aus. Währenddessen lagert sich das Produkt an den einzelnen Lamellen der Desublimatoren 1 ab. Dieser Vorgang erfolgt über eine bestimmte voreingestellte Zeitdauer. Anschließend soll das Produkt abgeschmolzen werden. In dieser Phase befindet sich zeitgleich die zweite Gruppe B von Desublimatoren 1. Es ist zu erkennen, dass die Zufuhr von Gasgemisch G zu der zweiten Gruppe B über ein Stellmittel 15 unterbrochen worden ist. In nicht näher dargestellter Weise wurde der Druck innerhalb der einzelnen Desublimatoren 1 verändert und/oder die Temperatur des Kühlmittels erhöht, sodass das flüssige Produkt P gewonnen werden kann.

Anschließend muss der Druck wieder verändert werden und/oder die Temperatur wieder gesenkt werden. In dieser Phase befindet sich zeitgleich die Gruppe C von Desublimatoren 1. In dieser Phase wird weder Gasgemisch G zugeführt noch Produkt gewonnen. Das Stellmittel 15 ist geschlossen.

Wenn das Gasgemisch G' aus der ersten Gruppe A nicht weiter gereinigt werden kann, wird das in der Bildebene untere Stellmittel 15 zur Gruppe C geöffnet und das zur Gruppe A geschlossen. Die Gruppe A wird dann in den Zustand überführt, in welchem das Produkt P abgeschmolzen wird, d. h. die Gruppe A übernimmt nun die Funktion der Gruppe B, während die Gruppe B wieder stärker gekühlt und/oder im Innendruck verändert wird, so dass nach Abschluss des Desublimationsprozesses in Gruppe C diese Aufgabe von Gruppe B übernommen werden kann. So ergibt sich ein fortwährender Ablauf, ohne dass die Zufuhr des Gasgemisches G unterbrochen werden muss. Eine solche Desublimationsanordnung 14 besitzt eine um ein Vielfaches größere Durchgangsleistung als die Betriebsweise mit nur einem einzelnen oder mit zwei parallel geschalteten Desublimatoren 1. Im konkreten Ausführungsbeispiel sind es 16 Desublimatoren pro Gruppe. Die hier beispielhaft gewählte Anzahl ist nicht einschränkend. Jede andere Anzahl von Desublimatoren 1 ist möglich.

Auch können weitere Gruppen vorgesehen sein, um Ausweichmöglichkeiten zu schaffen. Zudem sind einzelne Desublimatoren 1 in den jeweiligen Gruppen A einzeln zu- und abschaltbar, sei es für Wartungszwecke oder sei es, um die Kapazität der Anlage anzupassen. Der Vorteil einer solchen Anordnung ist, dass sie in hohem Maße skalierbar ist, indem eine größere oder kleinere Anzahl von baugleichen Desublimatoren 1 zum Einsatz kommt. Es können ganze Batterien von Desublimatoren in drei, sechs oder auch mehr Gruppen geschaltet werden.

Die Erfindung sieht eine Desublimationsanordnung von mindestens zwei Gruppen vor. Es können aber durchaus drei oder noch mehr Gruppen sein, die jeweils unterschiedlich beschaltet werden können. Darüber hinaus sieht die erfindungsgemäße Desublimationsanordnung eine nicht näher dargestellte Steueranordnung vor zur Steuerung der Stellmittel 15 bzw. der Kühlmittel und der flüssigen Produktströme sowie in nicht näher dargestellter Weise Mess- und Steuereinrichtungen zur Überwachung und Beeinflussung des Prozesses.

Die in Figur 10 dargestellt Parallelschaltung von Desublimatoren 1 kann um eine Reihenschaltung ergänzt sein, d.h. dass jede der Gruppen A, B, C mehrere in Reihe geschaltete Desublimatoren umfasst, während die Gruppen A, B, C zueinander parallel geschaltet sind.

### Bezugszeichen:

- 1 -: Desublimator
- 2 -: Gehäuse
- 3 -: Eintrittsbereich
- 4 -: Austrittsbereich
- 5 -: Anschlussstutzen
- 6 -: Austrittsstutzen
- 7 -: Lamelle
- 7' -: Lamelle
- 8 -: Lamelle
- 9 -: Innenseite
- 10 -: Gehäusewand
- 11 -: Kühlleitung
- 12 -: Kanal
- 13 -: Ringkammer
- 14 -: Desublimationsanordnung
- 15 -: Stellmittel
- 16 -: Längskante

- A -: Gruppe von Desublimatoren
- B -: Gruppe von Desublimatoren
- C -: Gruppe von Desublimatoren
- G -: Gasgemisch
- G' -: Gasgemisch (gereinigt)
- G" -: Gasgemisch (gereinigt)
- H -: Höhe von 2
- H1 -: Höhe von 7, 7'
- H2 -: Höhe von 8
- K -: Kühlmittel
- K' -: Kühlmittel (erwärmt)
- LA -: Mittellängsachse
- L1-: Längenabschnitt
- L2 -: Längenabschnitt
- L3 -: Längenabschnitt
- L4 -: Längenabschnitt
- L5 -: Längenabschnitt
- L6 -: Längenabschnitt
- P -: Produkt

## Patentansprüche

1. Diskontinuierlich arbeitender Desublimator zur Gewinnung von Produkten aus Gasgemischen mit einem Gehäuse (2) mit einer Gehäusewand (10) und an einer Innenseite (9) der Gehäusewand (10) angeordneten nach innen gerichteten Lamellen (7, 7'), welche zur Desublimation des Produktes durch ein Kühlmittel (K) kühlbar sind, welches durch Kanäle (12) an der Gehäusewand (10) leitbar ist, **dadurch gekennzeichnet, dass** das Gehäuse (2) zylindrisch ist und dazu ausgebildet ist, in seiner Längsrichtung (L) von dem Gasgemisch durchströmt zu werden, wobei in dem zylindrischen Gehäuse (2) mindestens eine innere Kühlleitung (11) angeordnet ist, welche das Gehäuse (2) in Längsrichtung (L) des Gehäuses (2) über seine gesamte Länge durchsetzt und welche mehrere, einzelne nach außen gerichtete Lamellen (8) besitzt, die in Umfangsrichtung der Kühlleitung beabstandet über den Umfang der Kühlleitung verteilt angeordnet sind und die jeweils in Längsrichtung (L) des Gehäuses (2) orientiert an der Kühlleitung (11) befestigt sind, wobei die Anzahl der nach innen gerichteten und/oder der nach außen gerichteten Lamellen (7, 7', 8) von einem Eintrittsende (3) des Gehäuses zu einem Austrittsende (4) des Gehäuses (2) zunimmt.

2. Desublimator nach Anspruch 1, **dadurch gekennzeichnet, dass** sich eine einzige Kühlleitung (11) zentral in Längsrichtung des zylindrischen Gehäuses (2) erstreckt.

3. Desublimator nach Anspruch 1 oder 2, **dadurch gekennzeichnet, dass** das Gehäuse (2) mehrere in Strömungsrichtung des Gasgemisches (G) aufeinanderfolgende Längenabschnitte (L1-L6) aufweist, wobei die nach außen gerichteten Lamellen (8) an der inneren Kühlleitung (11) und/oder die nach innen gerichteten Lamellen (7, 7') an der Gehäusewand (10) innerhalb eines Längenabschnittes (L1-L6) gleichmäßig verteilt über den Umfang der Kühlleitung (11) und/oder des Gehäuses (2) angeordnet sind.

4. Desublimator nach einem der Ansprüche 1 bis 3, **dadurch gekennzeichnet, dass** sich die nach innen gerichteten Lamellen (7, 7') radial gerade von außen nach innen und/oder die nach außen gerichteten Lamellen (8) radial gerade von innen nach außen erstrecken und jeweils in Längsrichtung des Gehäuses (2) verlaufen.

5. Desublimator nach einem der Ansprüche 1 bis 3, **dadurch gekennzeichnet, dass** die nach innen gerichteten Lamellen (7, 7') und/oder die nach außen gerichteten Lamellen (8) wendelförmig angeordnet sind.

6. Desublimator nach einem der Ansprüche 3 bis 5, **dadurch gekennzeichnet, dass** die einzelnen Längenabschnitte (L1-L6) unabhängig voneinander kühlbar und heizbar sind.

7. Desublimator nach einem der Ansprüche 1 bis 6, **dadurch gekennzeichnet, dass** jedem freien radialen Ende einer nach außen gerichteten Lamelle (8) unmittelbar gegenüberliegend ein freies radiales Ende einer nach innen gerichteten Lamelle (7) angeordnet ist.

8. Desublimator nach einem der Ansprüche 1 bis 7, **dadurch gekennzeichnet, dass** die Oberfläche der Lamellen (7, 7', 8) von einem Eintrittsende (3) des Gehäuses (2) zu einem Austrittsende (4) des Gehäuses (2) um einen Faktor größer als 1 und kleiner als 10 zunimmt.

9. Desublimator nach Anspruch 1, **dadurch gekennzeichnet, dass** es in Strömungsrichtung des Gasgemisches (G) wenigstens zwei aufeinander folgende Längenabschnitte (L1-L6) gibt, wobei die Anzahl der Lamellen (7, 7', 8) von Längenabschnitt zu Längenabschnitt zunimmt.

10. Desublimator nach einem der Ansprüche 1 bis 9, **dadurch gekennzeichnet, dass** die nach innen gerichteten Lamellen (7, 7') wenigstens zwei unterschiedliche Höhen (H1) haben, wobei die Höhe (H1) ausgehend von der Gehäusewand (10) nach radial innen zu messen ist.

11. Desublimator nach einem der Ansprüche 1 bis 10, **dadurch gekennzeichnet, dass** die Höhe (H1, H2) der Lamellen (7, 8) zwischen benachbarten Längenabschnitten (L1-L6) variiert, um eine Gassenbildung zwischen den freien Enden der Lamellen (7, 8) zu vermeiden.

12. Desublimator nach einem der Ansprüche 1 bis 11, **dadurch gekennzeichnet, dass** ein Innendurchmesser des Gehäuses (2) 100 mm bis 1.000 mm beträgt.

13. Desublimator nach einem der Ansprüche 1 bis 12, **dadurch gekennzeichnet, dass** der von der Gehäusewand (10) umgebene zylindrische Innenraum frei von Stützmitteln ist, welche gegenüberliegende Bereiche der Gehäusewand (10) oder die Gehäusewand (10) mit der Kühlleitung (11) verbinden.

14. Desublimationsanordnung mit mehreren Desublimatoren (1) nach einem der vorhergehenden Ansprüche, wobei eine erste Gruppe (A) der besagten Desublimatoren (1) in Parallelschaltung angeordnet und mit dem Gasgemisch (G) beaufschlagbar ist, und wenigstens eine weitere Gruppe (B, C) der besagten Desublimatoren (1) in Parallelschaltung angeordnet ist und mit dem Gasgemisch (G) beaufschlagbar ist, wobei jede der Gruppen (A, B, C) dafür vorgesehen ist, im Wechsel Produkte (P) durch Desublimation zu gewinnen und anschließend das bereits gewonnene Produkt (P) durch Änderung des Druckes und/oder Erhöhung der Temperatur abzuschmelzen, wobei Stellmittel (15) zur wechselweisen Zuleitung des Gasgemisches (G) zu der jeweiligen Gruppe (A, B, C) von Desublimatoren (1) vorgesehen sind.

15. Desublimationsanordnung nach Anspruch 14, **dadurch gekennzeichnet, dass** mehrere der Desublimatoren in Reihenschaltung angeordnet sind, wobei ein Gasstrom (G) von einem stromaufwärtigen Desublimator (1) einem stromabwärtigen Desublimator (1) zuleitbar ist.

## Claims

1. Discontinuously operating desublimator for the recovery of products from gas mixtures, with a housing (2) having a housing wall (10) and having inwardly directed lamellae (7, 7') which are arranged on an inside (9) of the housing wall (10) and which can be cooled, for the desublimation of the product, by a cooling medium (K) which can be conducted through ducts (12) on the housing wall (10), **characterized in that** the housing (2) is cylindrical, and is designed to be flowed through in its longitudinal direction (L) by the gas mixture, wherein at least one inner cooling line (11) is arranged in the cylindrical housing (2) that penetrates the housing (2) in longitudinal direction (L) of the housing (2) over its entire length and that possesses several and individual outwardly directed lamellae (8) that are arranged spaced apart over the circumference of the cooling line in the circumferential direction of the cooling line and are each fixed to the cooling line (11) in the longitudinal direction (L) of the housing (2), wherein the number of inwardly directed and/or of outwardly directed lamellae (7, 7', 8) increases from an inlet end (3) of the housing to an outlet end (4) of the housing (2).

2. Desublimator according to Claim 1, **characterized in that** a single cooling line (11) extends centrally in the longitudinal direction of the cylindrical housing (2).

3. Desublimator according to Claim 1 or 2, **characterized in that** the housing (2) has a plurality of length portions (L1-L6) succeeding one another in the direction of flow of the gas mixture (G), the outwardly directed lamellae (8) on the inner cooling line (11) and/or the inwardly directed lamellae (7, 7') on the housing wall (10) being arranged, within a length portion (L1-L6), so as to be distributed uniformly over the circumference of the cooling line (11) and/or of the housing (2).

4. Desublimator according to one of Claims 1 to 3, **characterized in that** the inwardly directed lamellae (7, 7') extend radially straight from outside inwards and/or the outwardly directed lamellae (8) extend radially straight from inside outwards and in each case run in the longitudinal direction of the housing (2).

5. Desublimator according to one of Claims 1 to 3, **characterized in that** the inwardly directed lamellae (7, 7') and/or the outwardly directed lamellae (8) are arranged helically.

6. Desublimator according to one of Claims 3 to 5, **characterized in that** the individual length portions (L1-L6) are coolable and heatable independently of one another.

7. Desublimator according to one of Claims 1 to 6, **characterized in that** a radially free end of an inwardly directed lamella (7) is arranged directly opposite each radially free end of an outwardly directed lamella (8).

8. Desublimator according to one of Claims 1 to 7, **characterized in that** the surface of the lamellae (7, 7', 8) increases from an inlet end (3) of the housing (2) to an outlet end (4) of the housing (2) by a factor greater than 1 and smaller than 10.

9. Desublimator according to Claim 1, **characterized in that** there are at least two successive length portions (L1-L6) in the direction of flow of the gas mixture (G), the number of lamellae (7, 7', 8) increasing from length portion to length portion.

10. Desublimator according to one of Claims 1 to 9, **characterized in that** the inwardly directed lamellae (7, 7') have at least two different heights (H1), the height (H1) to be measured radially inwards, starting from the housing wall (10).

11. Desublimator according to one of Claims 1 to 10, **characterized in that** the height (H1, H2) of the lamellae (7, 8) varies between adjacent length portions (L1-L6), in order to avoid the formation of corridors between the free ends of the lamellae (7, 8).

12. Desublimator according to one of Claims 1 to 11, **characterized in that** an inside diameter of the housing (2) amounts to 100 mm to 1000 mm.

13. Desublimator according to one of Claims 1 to 12, **characterized in that** the cylindrical inner space surrounded by the housing wall (10) is free of supporting means which connect opposite regions of the housing wall (10) or the housing wall (10) to the cooling line (11).

14. Desublimation arrangement with a plurality of desublimators (1) according to one of the preceding claims, a first group (A) of the said desublimators (1) being arranged in parallel connection and being capable of being acted upon with the gas mixture (G), and at least one further group (B, C) of the said desublimators (1) being arranged in parallel connection and being capable of being acted upon with the gas mixture (G), each of the groups (A, B, C) being provided for alternately recovering products (P) by desublimation and subsequently melting down the already recovered product (P) by a change of pressure and/or an increase of temperature, actuating means (15) for the alternate delivery of the gas mixture (G) to the respective group (A, B, C) of desublimators (1) being provided.

15. Desublimation arrangement according to Claim 14, **characterized in that** a plurality of desublimators are arranged in series connection, a gas stream (G) being capable of being delivered from an upstream desublimator (1) to a downstream desublimator (1).

## Revendications

1. Désublimateur opérant en discontinu pour obtenir des produits à partir de mélanges gazeux avec un boîtier (2) comportant une paroi de boîtier (10) et des lamelles (7, 7') dirigées vers l'intérieur et agencées sur un côté interne (9) de la paroi de boîtier (10), lesquelles lamelles peuvent être refroidies pour la désublimation du produit par un agent réfrigérant (K), qui peut mener à travers des canaux (12) à la paroi de boîtier (10), **caractérisé en ce que** le boîtier (2) est cylindrique et est conçu de manière à être parcouru dans sa direction longitudinale (L) par le mélange gazeux, dans lequel est agencée dans le boîtier cylindrique (2) au moins une conduite de refroidissement interne (11) qui traverse le boîtier (2) dans la direction longitudinale (L) du boîtier (2) sur toute sa longueur et qui possède plusieurs lamelles individuelles (8) dirigées vers l'extérieur, qui sont agencées espacées dans la direction périphérique de la conduite de refroidissement et réparties sur la périphérie de la conduite de refroidissement et qui sont fixées à la conduite de refroidissement (11) respectivement orientées dans la direction longitudinale (L) du boîtier (2), dans lequel le nombre des lamelles (7, 7', 8) dirigées vers l'intérieur et/ou dirigées vers l'extérieur augmente d'une extrémité d'entrée (3) du boîtier à une extrémité de sortie (4) du boîtier (2).

2. Désublimateur selon la revendication 1, **caractérisé en ce qu'**une conduite de refroidissement unique (11) s'étend de manière centrale dans la direction longitudinale du boîtier cylindrique (2).

3. Désublimateur selon la revendication 1 ou 2, **caractérisé en ce que** le boîtier (2)présente plusieurs sections de longueur (L1-L6) se suivant l'une l'autre dans la direction d'écoulement du mélange gazeux (G), dans lequel les lamelles (8) dirigées vers l'extérieur sur la conduite de refroidissement (11) et/ou les lamelles (7, 7') dirigées vers l'intérieur sur la paroi de boîtier (10) sont agencées réparties de manière uniforme dans une section de longueur (L1-L6) sur la périphérie de la conduite de refroidissement (11) et/ou du boîtier (2).

4. Désublimateur selon l'une quelconque des revendications 1 à 3, **caractérisé en ce que** les lamelles (7, 7') dirigées vers l'intérieur s'étendent radialement en ligne droite de l'extérieur vers l'intérieur et/ou les lamelles (8) dirigées vers l'extérieur s'étendent radialement en ligne droite de l'intérieur vers l'extérieur et s'écoulent respectivement dans la direction longitudinale du boîtier (2).

5. Désublimateur selon l'une quelconque des revendications 1 à 3, **caractérisé en ce que** les lamelles (7, 7') dirigées vers l'intérieur et/ou les lamelles (8) dirigées vers l'extérieur sont agencées en mode hélicoïdal.

6. Désublimateur selon l'une quelconque des revendications 3 à 5, **caractérisé en ce que** les sections de longueur individuelles (L1-L6) peuvent être refroidies et chauffées indépendamment l'une de l'autre.

7. Désublimateur selon l'une quelconque des revendications 1 à 6, **caractérisé en ce qu'**une extrémité radiale libre d'une lamelle (7) dirigée vers l'intérieur est agencée directement en regard de chaque extrémité radiale libre d'une lamelle (8) dirigée vers l'extérieur.

8. Désublimateur selon l'une quelconque des revendications 1 à 7, **caractérisé en ce que** la surface des lamelles (7, 7', 8) augmente d'une extrémité d'entrée (3) du boîtier (2) à une extrémité de sortie (4) du boîtier (2) d'un facteur supérieur à 1 et inférieur à 10.

9. Désublimateur selon la revendication 1, **caractérisé en ce qu'**il y a dans la direction d'écoulement du mélange gazeux (G) au moins deux sections de longueur (L1-L6) se suivant l'une l'autre, dans lequel la quantité des lamelles (7, 7', 8) augmente d'une section de longueur à l'autre.

10. Désublimateur selon l'une quelconque des revendications 1 à 9, **caractérisé en ce que** les lamelles (7, 7') dirigées vers l'intérieur ont au moins deux hauteurs différentes (H1), dans lequel la hauteur (H1) est à mesurer en partant de la paroi de boîtier (10) radialement vers l'intérieur.

11. Désublimateur selon l'une quelconque des revendications 1 à 10, **caractérisé en ce que** la hauteur (H1, H2) des lamelles (7, 8) varie entre des sections de longueur voisines (L1-L6) pour éviter une formation de gaz entre les extrémités libres des lamelles (7, 8).

12. Désublimateur selon l'une quelconque des revendications 1 à 11, **caractérisé en ce qu'**un diamètre interne du boîtier (2) atteint 100 mm à 1000 mm.

13. Désublimateur selon l'une quelconque des revendications 1 à 12, **caractérisé en ce que** l'espace interne cylindrique entouré par la paroi de boîtier (10) est exempt de moyens d'appui qui relient des zones opposées de la paroi de boîtier (10) ou la paroi de boîtier (10) à la conduite de refroidissement (11).

14. Agencement de désublimation avec plusieurs désublimateurs (1) selon l'une quelconque des revendications précédentes, dans lequel un premier groupe (A) desdits désublimateurs (1) est agencé en parallèle et peut être alimenté par le mélange gazeux (G) et au moins un autre groupe (B, C) desdits désublimateurs (1) est agencé en parallèle et peut être alimenté par le mélange gazeux (G), dans lequel chacun des groupes (A, B, C) est prévu pour produire par désublimation dans l'échange des produits (P) et faire fondre ensuite le produit déjà obtenu (P) par modification de la pression et/ou augmentation de la température, dans lequel il est prévu des moyens de réglage (15) pour acheminer tour à tour le mélange gazeux (G) au groupe respectif (A, B, C) de désublimateurs (1).

15. Agencement de désublimation selon la revendication 14, **caractérisé en ce que** plusieurs des désublimateurs sont agencés en série, dans lequel un courant gazeux (G) peut être acheminé d'un désublimateur amont (1) à un désublimateur aval (1).
